# EUROPEAN PATENT SPECIFICATION

(11) **EP 3 217 325 B1**
(45) Date of publication and mention of the grant of the patent: **17.03.2021**
(21) Application number: 15856417.9
(22) Date of filing: 03.11.2015
(51) Int. Cl.: G06K 19/00, G06K 19/06, G06K 7/10

(54) **DISPLAY METHOD AND DECODING METHOD FOR DYNAMIC RECOGNIZABLE TWO-DIMENSIONAL CODE**
ANZEIGEVERFAHREN UND DECODIERUNGSVERFAHREN FÜR DYNAMISCHEN ERKENNBAREN ZWEIDIMENSIONALEN CODE
PROCÉDÉ D'AFFICHAGE ET PROCÉDÉ DE DÉCODAGE DE CODE BIDIMENSIONNEL RECONNAISSABLE DYNAMIQUE

(30) Priority: 06.11.2014 US 201414534831
(43) Date of publication of application: 13.09.2017
(73) Proprietor: Tsou, Kuei-Sheng, Hsinchu City, Taiwan 300 (TW)
(72) Inventor: Tsou, Kuei-Sheng, Hsinchu City, Taiwan 300 (TW)
(74) Representative: Gee, Steven William
(86) International application number: PCT/CN2015/093685
(87) International publication number: WO 2016/070789

(56) References cited:
- CN-A- 102 760 242
- CN-A- 103 854 045
- JP-B1- 3 957 734
- TW-A- 201 428 635
- US-A1- 2013 306 721

## Description

### TECHNICAL FIELD

The technical field generally relates to a decoding method for a dynamic recognizable two-dimensional (2D) code; and in particular, relates to a decoding method for a dynamic recognizable two-dimensional code that is used for interaction between electronic devices.

### BACKGROUND

Two-dimensional (2D) codes are widely used in the current market. Some of the common 2D-code includes Code 49, Code 16K, PDF417, SuperCode, Dot Code A, USS Code One, MaxiCode, Data Matrix, Aztec Code, QR Code and the like.

The Quick Response Code (QR-code) is one of matrix barcodes which was originally designed for industrial applications, but has gained popularity in consumer market.

With the advancement of technology and application, additional features are continuously added to the QR-code; one of the common added features is the recognizability to human eyes, which also leads to the creation of customized style. For example, when selecting a QR-code for the user, a recognizable QR-code is developed to include a static image that is recognizable to the human eye, to enhance convenience to users. However, the basic function of the QR-code in commercial and advertising application remains the same. That is, a capturing device captures a QR-code; and after decoding the captured QR-code, the capturing device displays the data represented by the QR-code, transmits and receives data, or links to a specific website.

US2013/0306721 discloses a method of coding and decoding a sequence of two-dimensional codes. The two-dimensional codes are encoded according to a machine-readable code format and include non-time related information such as location information, device information, content information and command information. The two-dimensional codes also include information relating to the present time. A sequence of codes is generated at defined time intervals, the codes changing as the time information changes, so that effectively a three-dimensional code is generated. The sequence of machine-readable codes can be displayed on a diplay unit alongside a visual image which is recognizable by human eyes. One or more of the sequence of two-dimensional codes can be read and decoded by a user device. The decoded information can be transmitted to the controller for the display unit whereby the visual image can be altered according to the command information. The disclosure enables a user to interact with the display unit by way of the two-dimensional codes.

### SUMMARY

The main objective of the present invention is to provide a decoding method for a dynamic recognizable two-dimensional code.

To achieve the above objective, a decoding method for a verification code presented in the form of a dynamic recognizable two-dimensional code of the present invention, comprises the following steps:
providing at least one two-dimensional code, wherein the two-dimensional code is an image encoded according to a two-dimensional code format;
providing at least one recognizable image, wherein the recognizable image is recognizable by human eyes but is not recognizable by a two-dimensional code decoder in accordance with two-dimensional code formats;
sequentially displaying the at least one two-dimensional code and the at least one recognizable image on a display unit of a first electronic device according to a displaying pattern, wherein the displaying pattern defines a displaying sequence of displayed images, a displaying duration of each of the displayed images, and a time interval to a displayed image next in the sequence, defined as the time lapse between a displayed image ending and a next displayed image appearing; and wherein each of the displayed images is one of the at least one two-dimensional code or the at least one recognizable image;
using a camera unit of a second electronic device to capture the dynamic recognizable two-dimensional code displayed on the display unit of the first electronic device;
performing decoding on the captured dynamic recognizable two-dimensional code, and to determine the at least one two-dimensional code and the at least one recognizable image, and the displaying pattern;
defining the at least one determined two-dimensional code as a first state, defining the at least one recognizable image as a second state, and defining the first state and the second state to be opposite to each other;
computing to obtain a verification code based on the sequence of the displayed images, the determined states of two-dimensional codes, the determined states of recognizable images, and the determined displaying pattern;
and determining whether a subsequent operation is performed based on the computed verification code.

According to a preferred embodiment, the recognizable image also includes a blank image or a transparent page.

According to a preferred embodiment, the displaying duration of each of the displayed images is the same or different, and the time interval to a displayed image next in the sequence is not all zero.

According to a preferred embodiment, the displaying duration of each of the displayed images is the same, and the time interval to a displayed image next in the sequence is zero.

According to a preferred embodiment, the subsequent operation includes interaction between the first electronic device and the second electronic device.

According to a preferred embodiment, the subsequent operation includes decoding and using the data encoded in the two-dimensional codes of the dynamic recognizable two-dimensional code.

The decoding method for a dynamic recognizable two-dimensional code of the present invention can include the display of various types of the dynamic recognizable two-dimensional code by setting a displaying pattern. Together with decoding of the dynamic recognizable two-dimensional code, the present invention improves users' convenience and facilitates various interactions between electronic devices.

The foregoing will become better understood from a careful reading of a detailed description provided herein below with appropriate reference to the accompanying drawings.

### BRIEF DESCRIPTION OF THE DRAWINGS

FIG. 1 is a flow chart showing the displaying method of the dynamic recognizable two-dimensional (2D) code.
FIG. 2 is a schematic diagram that is consistent with the method of FIG. 1, and shows a 2D code and a recognizable image of the dynamic recognizable 2D code.
FIG. 3 is a schematic diagram that is consistent with the method of FIG. 1, and shows a displaying pattern of the dynamic recognizable 2D code.
FIG. 4 is a flow chart showing the decoding method of the dynamic recognizable 2D code in accordance with a preferred embodiment of the present invention.

Wherein:
100 dynamic recognizable 2D code
110 2D codc
120 recognizable image
130 displaying pattern

### DETAILED DESCRIPTION OF THE DISCLOSED EMBODIMENTS

In the following preferred embodiments, the QR code is used as an example of the two-dimensional (2D) code, in order to describe the structure and use of the present invention. However, it should be noted that the technical features of the present invention are also suitable for other types of 2D codes.

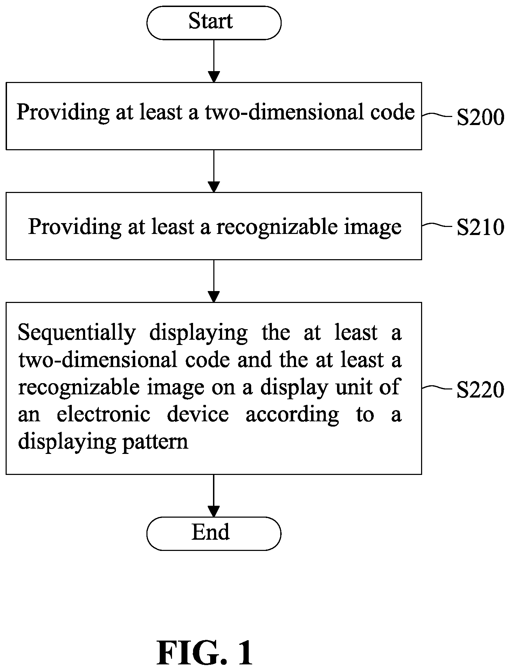

FIG. 1 is a flow chart showing the displaying method of the dynamic recognizable 2D code in accordance with a preferred embodiment of the present invention. As shown in FIG. 1, the displaying method for the dynamic recognizable 2D code includes the following steps:
Step S200: at least one 2D code is provided; wherein the 2D code is an image representing data and encoded in accordance with a 2D code format.
Step S210: at least one recognizable image is provided, wherein the recognizable image is an image that is recognizable by human eyes.
Step 220: the at least one 2D code and the at least one recognizable image are sequentially displayed on a display unit of an electronic device, in accordance with a displaying pattern. The displaying pattern includes defining a sequence of displayed images, the displaying duration of each of the displayed images, as well as the time interval to a displayed image next in the sequence, defined as the time lapse between a displayed image ending and a next displayed image appearing. Each of the displayed images is one of the at least one 2D code or the at least one recognizable image. It should be noted that the sequence of the displayed images, the displaying duration of each of the displayed images and the time intervals to the next displayed image may be changed to meet requirements of different applications. The display unit of the electronic device may display the various dynamic recognizable 2D codes.

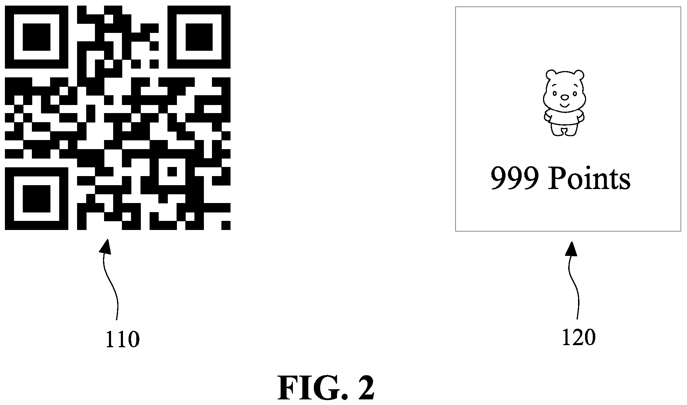

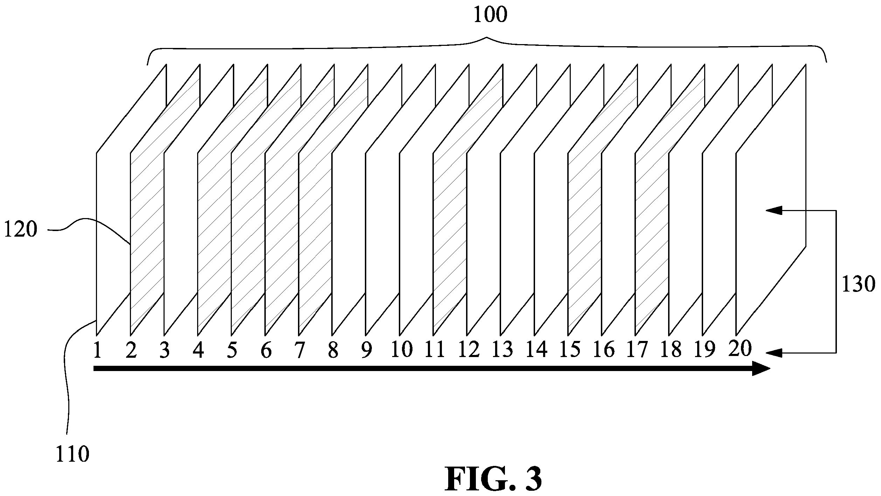

FIG. 2 is a schematic diagram that is consistent with the preferred embodiment of FIG. 1, and shows a 2D code and a recognizable image of a dynamic recognizable 2D code. FIG. 3 is a schematic diagram showing a displaying sequence of a dynamic recognizable 2D code. As shown in FIG. 2 and FIG. 3, a dynamic recognizable 2D code 100 for interaction between electronic devices, applicable to a first electronic device able to display the dynamic recognizable 2D code 100 and a second electronic device able to capture with a camera unit the dynamic recognizable 2D code 100 displayed on the display unit of the first electronic device. The dynamic recognizable 2D code 100 includes at least one 2D code 110, at least one recognizable image 120, and a displaying pattern 130 having a display period T. The 2D code 110 is formed by converting a plurality of data into an image encoded in accordance with the 2D code format. The recognizable image 120 is an image that is recognizable by human eyes but cannot be recognized by a 2D code decoder in accordance with 2D code formats. The displaying pattern 130 defines a sequence of displayed images, wherein each of the displayed images is one of the at least one 2D code or the at least one recognizable image. Each of the displayed images in the sequence is associated with a displaying duration (the length of time for which the image is displayed) and a time interval to a displayed image next in the sequence, defined as the time lapse between a displayed image ending and a next displayed image appearing. Also, the dynamic recognizable 2D code 100 may be displayed cyclically. In a preferred embodiment of the present invention shown in FIG. 3, the displaying pattern 130 includes a sequence of twelve 2D codes 110 and eight recognizable images 120, with each being set with a one-twentieth of the duration of the display period T for displaying duration, and time interval being set as zero (i.e., the next image is displayed immediately following the previous image).

However, it should be noted that the exemplary embodiment is only illustrative, instead of restrictive. A different displaying pattern can be defined based on application requirements. As aforementioned, the sequence of the displayed images, the displaying duration and time intervals to the next displayed image may all be changed to meet requirements of different applications. Moreover, the display unit of an electronic device may display the various dynamic recognizable 2D codes.

When a user touches the recognizable image 120 of the dynamic recognizable 2D code 100 displayed on a touch screen of an electronic device, the touching by the user is detected by an application program of the electronic device. Therefore, a user touching the dynamic recognizable 2D code 100 and being detected by the application program may trigger one or more subsequent operations defined by the application program.

Moreover, the 2D code 110 is an image recognizable by a 2D code decoder in accordance with 2D code formats. The 2D code 110 may be a conventional 2D code, a 2D code partially overlapped by an image recognizable to human eyes and the like.

Moreover, the recognizable image 120 is defined as an image that is recognizable by human eyes, but cannot be recognized by a 2D code decoder based on 2D code formats, such as, a picture or drawing of dolls, trees, flowers and grass, numerical signs, company trademarks, photos, a blank page or a transparent page, and the like.

In addition, it should also be noted that in the displaying pattern 130, each of the 2D-codes 110 may be different from or the same as the other 2D-codes 110 and each of the recognizable images 120 may be different from or the same as the other recognizable codes 120.

The plurality of data encoded in accordance with a 2D code format may vary depending on the application and the interaction between the electronic devices. In one embodiment, for example, the data may include at least a device data to identify the first displaying electronic device, an information exchange protocol to indicate the interaction between two electronic devices conducted through the dynamic recognizable 2D-code 100, and a validation key for pairing and matching between two electronic devices conducting the interaction.

Specifically, the dynamic recognizable 2D code 100 of the present invention can be displayed on a display unit of an electronic device. A sequence of 2D codes 110 and recognizable images 120, that is, displayed images, are displayed following a displaying pattern 130 on a display unit of the electronic device, wherein the displaying pattern 130 defines a displaying sequence of displayed images, with each displayed image in the sequence associated with a displaying duration and time interval to the next in the sequence. Also, the dynamic recognizable 2D code 100 may be displayed cyclically.

In actual application, the dynamic recognizable 2D code 100 may appear in any of the following forms at least:
Similar to static 2D codes: in this form, each of the displayed images is associated with a short displaying duration and a zero-length time interval. As such, the human eyes are unable to detect that the dynamic recognizable 2D code 100 is formed by a sequence of displayed images for which displaying time are all short and fast, wherein all the 2D codes 110 are the same, and the recognizable image 120 is either a blank image or a transparent page.

Dynamic flashing 2D code: two variations are included in this form. The first involves the recognizable images 120 and the same 2D codes 110, wherein the recognizable image 120 can overlap the 2D code 110. In the second variation, the displaying time associated with the displayed images is set longer, wherein the recognizable image 120 includes at least a blank image or a transparent page. As the blank or transparent page associated with a longer displaying duration is displayed, the dynamic recognizable 2D code 100 creates a flashing effect to the human eyes.

2D code with motion image: in this form, the 2D codes 110 of the dynamic recognizable 2D code 100 may be the same or different, and the recognizable images 120 include a plurality of recognizable images constituting a motion picture. When the sequence of displayed images is displayed quickly, a dynamic effect of motion picture is created for the human eyes through the continuity of the recognizable images.

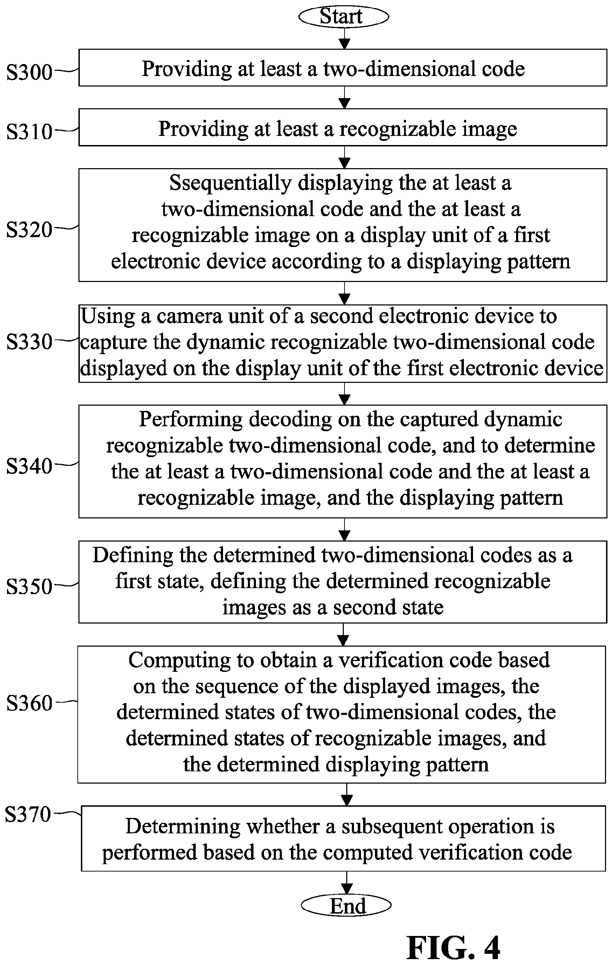

FIG. 4 is a flow chart showing the decoding method of the dynamic recognizable 2D code in accordance with a preferred embodiment of the present invention. As shown in FIG. 4, the decoding method of the dynamic recognizable 2D code of the present invention includes the following steps:
Step S300: at least one 2D code is provided; wherein the 2D code is an image representing data and encoded in accordance with a 2D code format.
Step S310: at least one recognizable image is provided, wherein the recognizable image is an image that may be recognizable by human eyes.
Step 320: the at least one 2D code 110 and the at least one recognizable image 120 are sequentially displayed on a display unit of a first electronic device, in accordance with a displaying pattern 130. The displaying pattern includes defining a sequence of displayed images, the displaying duration of each of the displayed images, as well as the time interval to a displayed image next in the sequence, defined as the time lapse between a displayed image ending and a next displayed image appearing. Each of the displayed images is one of the at least one 2D code 110 or the at least one recognizable image 120.
Step S330: capturing the dynamic recognizable 2D code 100 displayed on the display unit. For example, a camera unit of a second electronic device is used to capture the dynamic recognizable 2D code 100 displayed on the display unit of the first electronic device. However, the exemplar is only illustrative, instead of restrictive.
Step S340: performing decoding on the captured dynamic recognizable 2D code 100, and to determine the 2D codes and the recognizable images, and the displaying pattern.
Step S350: defining the determined 2D codes as a first state, defining the determined recognizable images as a second state, and defining the first state and the second state to be opposite to each other.
Step S360: computing to obtain a verification code based on the sequence of the displayed images, the determined states of 2D codes, the determined states of recognizable images, and the determined displaying pattern.
Step S370: determining whether a subsequent operation is performed based on the computed verification code.

The above-mentioned steps S300-S320 are the same as the steps S200-S220 of FIG. 1. Since steps S200-S220 have been described in detail above, therefore steps S300-S320 will not be described here. The steps of S330-S370 are explained as follows:
The dynamic recognizable 2D code 100 may be used to generate a verification code, used between two electronic devices for verification purposes. For example, when a dynamic recognizable 2D code 100 is captured by the camera unit of the second electronic device, the 2D code 110 and the recognizable image 120 of the dynamic recognizable 2D code 100 are determined by a 2D code decoder, according to the 2D code formats. The 2D code 110 and the recognizable image 120 are then presented in two opposite states, respectively. For example, the two opposite states are "1" and "0" or "high" and "low," respectively. After the computation is performed, a "verification code" formed by a sequence of "1" and "0" may be obtained; and the determination of the "verification code" may decide whether any subsequent operation is triggered depending on an application program. The subsequent operation may further include performing interactive operations between the two electronic devices, or may further include deciding whether or not to perform the decoding (of) and using the data encoded in the 2D codes 110 of the dynamic recognizable 2D code 100 captured by the second electronic device.

It will be apparent to those skilled in the art that various modifications and variations can be made to the disclosed embodiments. It is intended that the specification and examples be considered as exemplary only, with a true scope of the disclosure being indicated by the following claims.

## Claims

1. A decoding method for a verification code presented in a form of a dynamic recognizable two-dimensional code (100), comprising the following steps:
providing at least one two-dimensional code (110), wherein the two-dimensional code is an image encoded according to a two-dimensional code format;
providing at least one recognizable image (120), wherein the recognizable image is recognizable by human eyes but is not recognizable by a two-dimensional code decoder in accordance with two-dimensional code formats;
sequentially displaying the at least one two-dimensional code and the at least one recognizable image on a display unit of a first electronic device according to a displaying pattern, wherein the displaying pattern (130) defines a displaying sequence of displayed images, a displaying duration of each of the displayed images, and a time interval to a displayed image next in the sequence, defined as the time lapse between a displayed image ending and a next displayed image appearing; and wherein each of the displayed images is one of the at least one two-dimensional code or the at least one recognizable image;
using a camera unit of a second electronic device to capture the dynamic recognizable two-dimensional code (100) displayed on the display unit of the first electronic device;
performing decoding on the captured dynamic recognizable two-dimensional code, and to determine the at least one two-dimensional code (110) and the at least one recognizable image (120), and the displaying pattern;
defining the at least one determined two-dimensional code (110) as a first state, defining the at least one determined recognizable image (120) as a second state, and defining the first state and the second state to be opposite to each other;
computing to obtain a verification code based on the sequence of the displayed images, the determined states of two-dimensional codes, the determined states of recognizable images, and the determined displaying pattern; and
determining whether a subsequent operation is performed based on the computed verification code.

2. The decoding method for a verification code presented in a form of a dynamic recognizable two-dimensional code as claimed in claim 1, wherein the recognizable image also includes a blank image or a transparent page.

3. The decoding method for a verification code presented in a form of a dynamic recognizable two-dimensional code as claimed in claim 1, wherein the displaying duration of each of the displayed images is the same or different, and the time interval to a displayed image next in the sequence is not all zero.

4. The decoding method for a verification code presented in a form of a dynamic recognizable two-dimensional code as claimed in claim 3, wherein the displaying duration of each of the displayed images is the same, and the time interval to a displayed image next in the sequence is zero.

5. The decoding method for a verification code presented in a form of a dynamic recognizable two-dimensional code as claimed in claim 1, wherein the subsequent operation includes interaction between the first electronic device and the second electronic device.

6. The decoding method for a verification code presented in a form of a dynamic recognizable two-dimensional code as claimed in claim 1, wherein the subsequent operation includes decoding and using the data encoded in the two-dimensional codes of the dynamic recognizable two-dimensional code.

## Patentansprüche

1. Ein Decodierungsverfahren für einen Verifizierungscode, der in Form eines dynamisch erkennbaren zweidimensionalen Codes (100) dargestellt ist, mit den folgenden Schritten:
Bereitstellen mindestens eines zweidimensionalen Codes (110), wobei der zweidimensionale Code ein Bild, das nach einem zweidimensionalen Code-Format codiert ist;
Bereitstellen mindestens eines erkennbaren Bildes (120), wobei das erkennbare Bild für menschliche Augen erkennbar ist, jedoch nicht für einen zweidimensionalen Code-Decoder gemäß zweidimensionalen Code-Formaten erkennbar ist;
sequentielle Anzeige des mindestens einen zweidimensionalen Codes und des mindestens einen erkennbares Bild auf einer Anzeigeeinheit einer ersten elektronischen Vorrichtung gemäß einem Anzeigemuster, wobei das Anzeigemuster (130) eine Anzeigesequenz von angezeigten Bildern, eine Anzeigedauer jedes der angezeigten Bilder und ein Zeitintervall zu einem angezeigten Bild als nächstes in der Sequenz definiert, das als der Zeitablauf zwischen dem Ende eines angezeigten Bildes und dem Erscheinen eines nächsten angezeigten Bildes definiert ist; und wobei jedes der angezeigten Bilder einen der mindestens einen zweidimensionalen Codes oder das mindestens eine erkennbare Bild;
Verwendung einer Kameraeinheit eines zweiten elektronischen Geräts zur Erfassung des dynamischen, erkennbaren zweidimensionalen Codes (100), der auf der Anzeigeeinheit des ersten elektronischen Geräts angezeigt wird;
Durchführen der Decodierung des erfassten dynamischen erkennbaren zweidimensionalen Codes und Bestimmen des mindestens einen zweidimensionalen Codes (110) und des mindestens einen erkennbaren Bild (120), und das Anzeigemuster;
Definition des mindestens einen bestimmten zweidimensionalen Codes (110) als einen ersten Zustand, Definieren des mindestens einen bestimmten zweidimensionalen Codes (110) als einen ersten Zustand, Definieren des mindestens einen bestimmten erkennbaren Bildes (120) als einen zweiten Zustand und Definition des ersten Zustands und des zweiten Zustands als einander entgegengesetzt;
Berechnung, um einen Verifizierungscode zu erhalten, der auf der Sequenz der angezeigten Bilder, den bestimmten Zuständen der zweidimensionalen Codes, den bestimmten Zuständen der erkennbaren Bilder und dem bestimmten Anzeigemuster basiert; und
Bestimmung, ob eine nachfolgende Operation auf der Grundlage des berechneten Verifizierungscodes durchgeführt wird.

2. Decodierverfahren für einen Verifizierungscode, der in Form eines dynamisch erkennbaren zweidimensionalen Codes nach Anspruch 1 dargestellt ist, wobei das erkennbare Bild auch ein leeres Bild oder eine transparente Seite enthält.

3. Decodierverfahren für einen Verifizierungscode, der in Form eines dynamisch erkennbaren zweidimensionalen Codes nach Anspruch 1 dargestellt ist, wobei die Anzeigedauer jedes der angezeigten Bilder gleich oder unterschiedlich ist und das Zeitintervall bis zu einem angezeigten Bild, das in die Sequenz das nächste ist, nicht ganz Null ist.

4. Decodierungsverfahren für einen Verifizierungscode, der in Form eines dynamischen erkennbaren zweidimensionaler Code nach Anspruch 3 dargestellt ist, wobei die Anzeigedauer jedes der angezeigten Bilder die gleiche ist und das Zeitintervall bis zu einem angezeigten Bild, das in die Sequenz das nächste ist, Null ist.

5. Decodierungsverfahren für einen Verifizierungscode, der in Form eines dynamischen erkennbaren zweidimensionaler Code nach Anspruch 1 dargestellt ist, wobei die nachfolgende Operation die Interaktion zwischen dem ersten elektronischen Gerät und dem zweiten elektronischen Gerät einschließt.

6. Decodierungsverfahren für einen Verifizierungscode, der in Form eines dynamischen erkennbaren zweidimensionaler Code nach Anspruch 1 dargestellt ist, wobei die nachfolgende Operation die Dekodierung und Verwendung der in den zweidimensionalen Codes des dynamisch erkennbaren zweidimensionalen Codes kodierten Daten einschließt.

## Revendications

1. Un procédé de décodage pour un code de vérification présenté sous la forme d'un code bidimensionnel reconnaissable dynamique (100), comprenant les étapes suivantes :
fournir au moins un code bidimensionnel (110), dans lequel le code bidimensionnel est une
image codée selon un format de code bidimensionnel ;
fournir au moins une image reconnaissable (120), dans laquelle l'image reconnaissable est reconnaissable par l'oeil humain mais n'est pas reconnaissable par un décodeur de code bidimensionnel selon des formats de code bidimensionnel ;
afficher séquentiellement le au moins un code bidimensionnel et la au moins une image reconnaissable sur une unité d'affichage d'un premier dispositif électronique selon un modèle d'affichage, dans lequel le modèle d'affichage (130) définit une séquence d'affichage d'images affichées, une durée d'affichage de chacune des images affichées, et
un intervalle de temps jusqu'à une image affichée suivante dans la séquence, défini comme le laps de temps entre une image affichée se terminant et une image affichée suivante apparaissant ; et dans lequel chacune des images affichées est l'un de l'au moins un code bidimensionnel ou la au moins une image reconnaissable ;
utiliser une unité de caméra d'un deuxième dispositif électronique pour capturer le code bidimensionnel reconnaissable dynamique (100) affiché sur l'unité d'affichage du premier dispositif électronique ;
effectuer un décodage sur le code bidimensionnel reconnaissable dynamique saisi, et déterminer le au moins un code bidimensionnel (110) et la au moins une image reconnaissable
(120), et le modèle d'affichage ;
définir le au moins un code bidimensionnel déterminé (110) en tant que premier état, définissant la au moins une image déterminée reconnaissable (120) en tant qu'un deuxième état, et définissant le premier et le deuxième état comme étant opposés l'un à l'autre ;
calculer pour obtenir un code de vérification basé sur la séquence des images affichées, les états déterminés des codes bidimensionnels, les états déterminés des images reconnaissables et le modèle d'affichage déterminé ; et
déterminer si une opération ultérieure est effectuée sur la base du code de vérification calculé.

2. Procédé de décodage d'un code de vérification présenté sous la forme d'un code bidimensionnel reconnaissable dynamique selon la revendication 1, dans lequel l'image reconnaissable comprend également une image vierge ou une page transparente.

3. Procédé de décodage pour un code de vérification présenté sous la forme d'un code bidimensionnel reconnaissable dynamique tel que revendiqué dans la revendication 1, dans lequel la durée d'affichage de chacune des images affichées est identique ou différente, et l'intervalle de temps jusqu'à une image affichée suivante dans la séquence n'est pas entièrement nulle.

4. Procédé de décodage d'un code de vérification présenté sous la forme d'un code bidimensionnel reconnaissable dynamique tel que revendiqué dans la revendication 3, dans lequel la durée d'affichage de chacune des images affichées est la même, et l'intervalle de temps jusqu'à une image affichée suivante dans la séquence est égal à zéro.

5. Procédé de décodage d'un code de vérification présenté sous la forme d'un code bidimensionnel reconnaissable dynamique tel que revendiqué dans la revendication 1, dans lequel l'opération suivante comprend l'interaction entre le premier dispositif électronique et le deuxième dispositif électronique.

6. Procédé de décodage d'un code de vérification présenté sous la forme d'un code bidimensionnel reconnaissable dynamique tel que revendiqué dans la revendication 1, dans lequel l'opération suivante comprend le décodage et l'utilisation des données codées dans les codes bidimensionnels du code bidimensionnel reconnaissable dynamique.
